# EUROPEAN PATENT SPECIFICATION

(11) **EP 2 407 700 B1**
(45) Date of publication and mention of the grant of the patent: **24.10.2012**
(21) Application number: 10425240.8
(22) Date of filing: 16.07.2010
(51) Int. Cl.: F16L 37/36

(54) **Compact cartridge coupling**
Kompakter Kartuschenanschluss
Couplage de cartouche compact

(43) Date of publication of application: 18.01.2012
(73) Proprietor: Faster S.p.A., 20124 Milan (IT)
(72) Inventor: Rusconi, Paolo, 26027 Rivolta d'Adda (IT)
(74) Representative: Borsano, Corrado

(56) References cited:
- EP-A1- 1 058 043
- EP-A2- 0 038 056
- US-A- 4 598 896
- US-B1- 6 776 187

## Description

The present invention relates to a compact cartridge coupling.

Quick couplings according to ISO 7541 standard are nowadays consolidated on the world market, especially in the farming/forestry field. ISO standards govern the dimensions of couplings to ensure interchangeability between different manufacturers, coupling ability and various minimum use requirements, such as pressure, flow rate and so on.

Among the quick couplings according to the mentioned standard, cartridge couplings are characterized by a compact design while keeping the same functional principles of ISO 7241 standard.

In particular, cartridge couplings may be inserted into a casing, commonly made of cast iron, in order to allow more effective use of the cartridge coupling under operating conditions contemplating high operating pressures, in particular also with sudden changes of flow direction and particularly high pressure pulsating frequencies.

Furthermore, cartridge couplings are generally employed by positioning them inside these cast iron casings when conditions of use contemplate the presence of earth, mud and debris, as precisely occurs, for example, in the case of use in the farming/forestry field. A similar coupling is e.g. described in document EP 1 058 043 A1.

One of the main drawbacks of the cartridge couplings of the prior art is thus related to non-optimal reliability, with particular reference to resistance and duration of the components and of the coupling as a whole.

Furthermore, an improvable aspect of cartridge couplings of the prior art relates to overall dimensions.

It is a main task of the present invention to either eliminate or reduce the above-mentioned drawbacks.

In the scope of this task, it is thus the object of the present invention to provide a quick cartridge coupling which is characterized by small overall dimensions, so as to be placed in narrow spaces.

It is a further object of the present invention to provide a quick cartridge coupling provided with a decompression system which allows to reduce the pressure inside the system, thus reducing the coupling and uncoupling loads.

This task and these and other objects which will be more apparent below are achieved by a cartridge coupling for connecting a pressurized fluid line between a vehicle or apparatus and a utility, comprising an outer casing in which a female half-coupling is inserted, comprising a front valve assembly and adapted to accommodate a male half-coupling, said casing comprising at least a clean oil recovery channel and a fouled oil draining channel, characterized in that it further comprises, on said female half-coupling, decompression means to reduce the pressure within the line, thus facilitating the coupling and uncoupling operations of the male half-coupling to/from said female half-coupling.

The cartridge coupling according to the present invention is further characterized in that said decompression means allow to reduce pressure in both the female part and the male part.

Again, the cartridge coupling according to the present invention is characterized in that it further comprises mechanical blocking means adapted to prevent the front valve assembly from closing when the male coupling is inserted and regardless of the flow direction and pressure in the line, and adapted to allow the extra travel of said valve assembly needed for completely inserting the male half-coupling.

Further features and advantages of the present invention will be more apparent from the following detailed description given by way of non-limitative example and shown in the accompanying drawings, in which:
figure 1 shows a section view with longitudinal plane of the cartridge coupling according to the present invention;
figure 2 shows an enlarged detail of the valve assembly of the cartridge coupling in figure 1, again in section with a longitudinal plane;

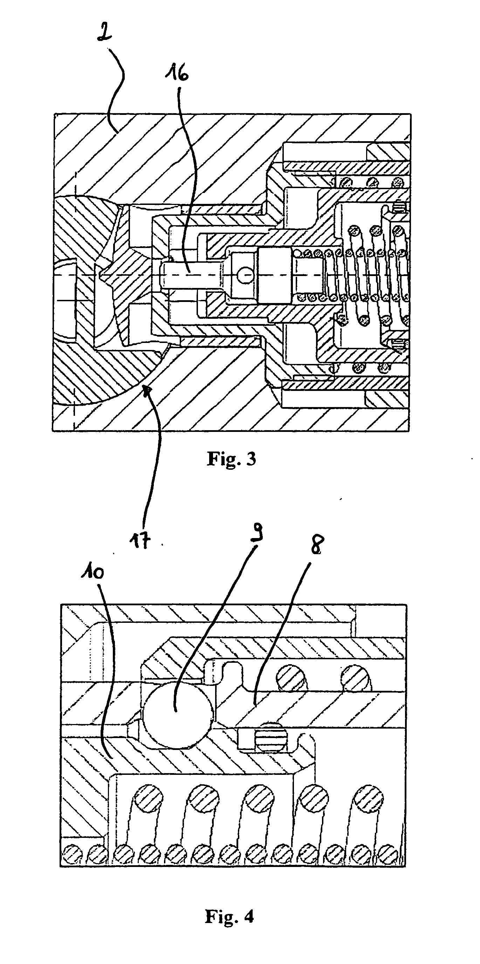

figure 3 shows in detail, again in longitudinal section, the decompression system of the cartridge coupling in figure 1;
figure 4 shows in detail, again in longitudinal section, the mechanical blocking system of the cartridge coupling in figure 1;
figure 5 shows, again in longitudinal section, the cartridge coupling in figure 1 on which a male half-coupling is engaged;
figure 6 shows a detail of the lever and cam actuating system of the decompression system of the cartridge coupling according to the present invention;
figure 7 shows, again in longitudinal section, a cartridge coupling according to the present invention in an engaged configuration with closed valves.

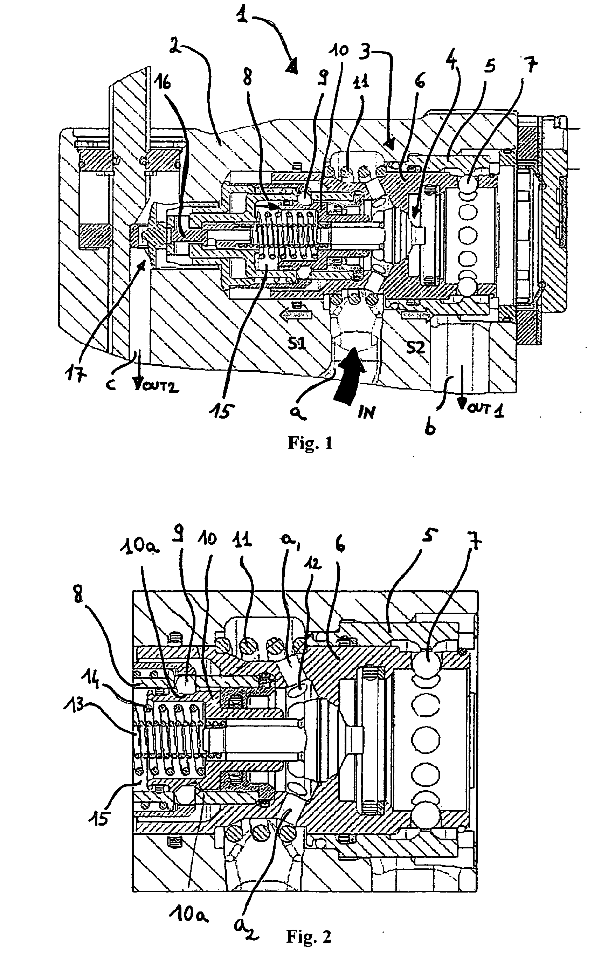

According to a preferred embodiment of the present invention shown in the mentioned figures by way of non-limiting example, the cartridge coupling **1** according to the present invention comprises an outer casing **2,** preferably made of cast iron or other suitable material, in which a female half-coupling **3** is accommodated. Such a female half-coupling is of the type adapted to accommodate a male half-coupling and is preferably of the type responding to the features established by ISO 7241 standard. Several pipes are obtained in said outer casing **2** for the circulation of fluid, generally oil, which flows through the hydraulic line on which the half-couplings are inserted. In particular, with reference to figure 1, the fluid enters from the main feeding pipe **a** of the line according to the arrow indicated by **IN** thus feeding the female half-coupling **3.** The system then provides for the recovery of the fouled oil by means of the front draining channel **b,** where the flow direction is represented by the **OUT 1** arrow, while the clean oil is collected by means of the clean oil recovery channel **c, OUT2,** and recirculated.

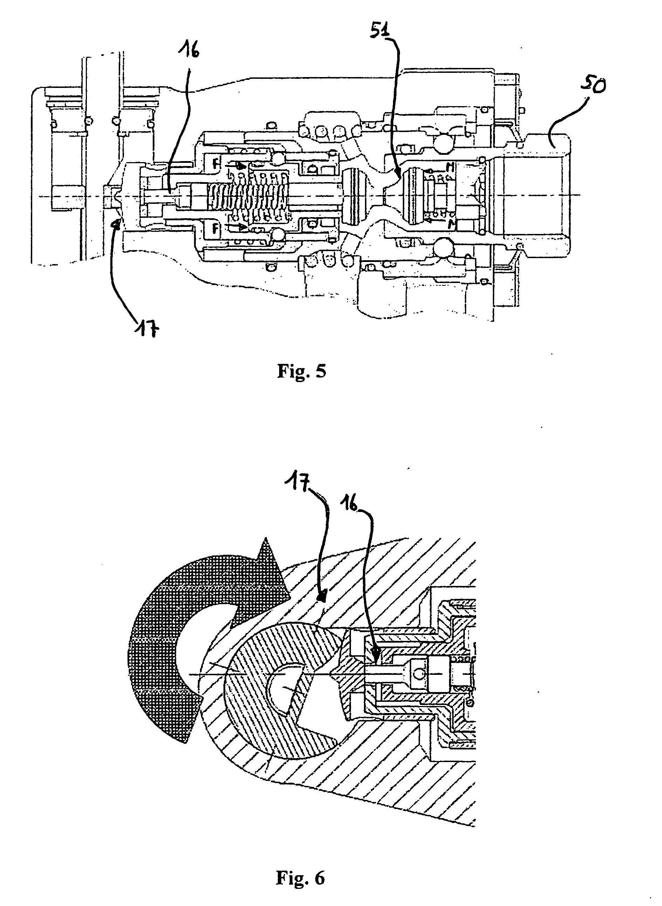

Said female half-coupling **3** comprises a ring nut **5,** which is mechanically blocked with respect to the outer casing **2,** the ball body **6** is capable of axially translating with respect to the body **2.** The ball body **6,** by virtue of the balls **7,** is capable of ensuring the connection of the male half-coupling, as shown in figure 5, the balls **7** being capable of firmly holding the male half-coupling as known in the field.

The valve assembly **4,** capable of adhering to the walls of the inner port obtained within the ball body **6** so as to close the axial passage to the fluid, is provided in a substantially axial position. As shown again in the accompanying figures, the main feeding pipe **a** carries the fluid to the zone of the rearming spring **11** and from this zone enters the female half-coupling through the pipes **a1** and **a2** and the radial passage holes **12** to reach the valve body **4.** Until the male half-coupling is engaged, the valve body **4** closes the axial gap of the female half-coupling **3,** as shown in figures 1 and 2. In this situation, the valve assembly **4** is pushed closed by a first spring **13.** The movable equipment of the female half-coupling **3** is completed by an inner body **8,** on which a plurality of blocking balls **9** are radially provided, which allow the mechanical blocking of an inner slider **10,** also axially movable and provided on the inner surface thereof with a plurality of seats **10a,** in which the blocking balls **9** may be accommodated.

Again with reference to the figures, in particular to figures 1 and 2, a chamber **15** which is filled with the pressurized fluid during the operation of the coupling, is present behind the valve assembly **4.**

The valve assembly **4** is connected to a spring **13** acting between said valve assembly **4** and a decompression valve **16** placed in an axial position at the opposite end of the half-coupling **3** with respect to the front valve assembly **4.** Said decompression valve **16** is, in turn, connected to cam and lever actuating means **17,** which allow the opening of the decompression valve.

The operation of the cartridge coupling device according to the present invention will now be described again with reference to the accompanying figures.

The step of coupling and uncoupling the male half-coupling **50** in the female half-coupling **3** occurs with a single continuous maneuver. During the first step of coupling, the male part pushes on the balls **7** of the ball body **6** moving the front valve assembly **4,** which opens the valve **16** placed on the rear part of the half-coupling **3.** Thereby, a sudden lowering of the fluid pressure inside the female half-coupling **3** occurs. Once the pressure has been decreased, it is easier to proceed with the coupling maneuver because the user must sustain a lower effort to introduce the male half-coupling **50** in the female half-coupling **3.** Continuing with the insertion in the male half-coupling **50,** the valve body **4** continues to retract, being pushed by the valve assembly **51** of the male half-coupling, thus freeing the balls of the mechanical block **9.**

The retraction of the valve body **4** indeed causes a retraction of the inner body **8** and the consequent disengagement of the blocking balls **9** from the seats **10a** obtained on the inner slider **10** as well.

Once the mechanical blocking balls **9** have been released, the equipment of the valve body **4** may perform the extra travel towards the rear part of the half-coupling which is required to complete the engagement of the pressurized male.

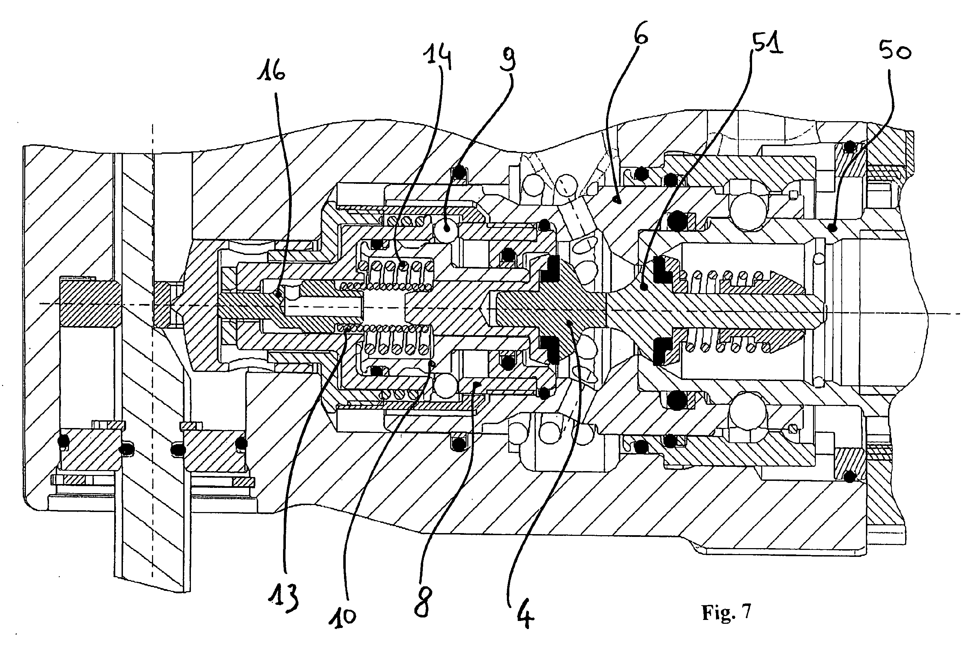

Such a situation is shown in figure 7, which shows the system in the configuration in which the male half-coupling **50** is fully inserted in the female half-coupling **3** and the valve body **4** abuts against the movable equipment of the female half-coupling, so that the valve assembly **51** closes the line.

The retraction of the valve body **4** causes the inner slider **10** and the inner body **8** also to retract, with the consequent compression of the springs **13** and **14,** which are thus loaded, and the opening of the valve **16.**

As apparent in figure 7, the mechanical blocking balls **9** have exited from the seat **10a,** thus allowing the movement of the inner slider **10.**

In this system configuration, the coupling of the male half-coupling **50** has been completed and the female half-coupling **3** may be pressurized. The fluid fills the chamber **15** provided inside the inner body **8,** the pressure of the fluid exerting an axial thrust on the inner slider **10** which moves forward, i.e. it axially moves towards the end of the female half-coupling **3** intended to accommodate the male half-coupling **50,** pushing the valve body **4** forward, thus determining the retraction of the valve body **51** of the male half-coupling towards the interior of the male half-coupling **50,** thus causing the opening of the line.

In order to carry out the uncoupling operation with the line being pressurized, acting on the lever actuating means **17** is possible so as to manually open the decompression valve **16.** Thereby, even if the male is still pressurized and the pressurized fluid is still present in the chamber **15** of the female half-coupling **3,** the pressure in the chamber **15** may be reduced, thus facilitating the disconnection operation, because it allows the retraction of the valve body **4** of the female half-coupling, which allows the valve assembly **51** of the male half-coupling to be closed. Thereby, even if the pressurized fluid is still present in the half-coupling, the user may easily proceed and disconnect the two half-couplings.

Naturally, as mentioned, opening the decompression valve **16** allows to drain the line through the clean oil pipe **c** and to recover it in the hydraulic circuit.

The user can therefore choose whether to employ the cam and lever actuating means **17** also during the coupling operation, described above without referring to the use of said means.

According to a preferred embodiment of the present invention shown in the accompanying figures, the decompression valve **16** is characterized by a metal seal system of the cone-on-edge type on the inner body **8,** obtained by upsetting the cone of the decompression valve on the rear edge of the inner body **8.**

Again, the cartridge coupling according to the present invention includes a 2:1 balancing system of forces acting on the valves of the female half-coupling and of the male half-coupling, so as to further facilitate the coupling of a pressurized male. Such a balancing is obtained by conveniently dimensioning the diameter of the inner slider **8,** on the crown of which the pressure force due to the fluid in chamber **15** acts according to the arrows **F** in figure 5, and of the valve assembly **51,** on the crown of which the pressure of the fluid acts according to the arrows shown by M, again in figure **5****.** By conveniently dimensioning the thrust crown of the inner slider **8,** a 2:1 ratio of the thrust forces due to the fluid pressure is obtained to the benefit of the thrust acting on the valve assembly **4** of the female half-coupling. This imbalance facilitates the opening of the valve assembly **51** and of the male alike when the male half-coupling is pressurized.

It has thus been shown that the cartridge coupling according to the present invention, characterized by a compact design and reduced dimensions which allow its positioning in narrow spaces, allows to achieve the prefixed task and objects.

In particular, it has been shown that the cartridge coupling according to the present invention allows to reduce the coupling and uncoupling loads, thus facilitating the coupling and uncoupling operations even when pressurized fluid is present in the line, regardless of whether the pressurized fluid is either in the male half-coupling or in the female half-coupling.

Again, the cartridge coupling according to the present invention allows to also reduce the amount of drawn oil drained through the pipe **b** because the coupling and uncoupling operations are optimized thus reducing the losses of fouled oil.

## Claims

1. A cartridge coupling (1) of the type adapted to connect a pressurized fluid line between a vehicle or apparatus and a utility, comprising an outer casing (2) in which a female half-coupling (3) is inserted, comprising a front valve assembly (4) and adapted to accommodate a male half-coupling (50) also provided with a valve assembly (51), said casing comprising at least one main feeding channel (a), a clean oil recovery channel (c) and a fouled oil draining channel (b), and further comprising, on said female half-coupling (3), decompression means (16) to reduce the pressure within the line thus facilitating the coupling and uncoupling operations of the male half-coupling to/from said female half-coupling, further comprising mechanical blocking means (9, 10a) acting on said valve assembly (4) and adapted, when said male half-coupling (50) is inserted in said female half-coupling, to prevent the valve assembly (4) of said female half-coupling (3) from closing regardless of flow direction and pressure intensity of the fluid in the line, **characterized in that** said mechanical blocking means comprise at least one or more mechanical blocking balls (9) supported by an inner body (8) and adapted to be selectively accommodated in appropriate seats (10a) obtained on the outer surface of an inner slider (10) also axially movable, said inner body (8) and said inner slider (10) being coaxial to each other and coaxial to said front valve assembly (4).

2. A cartridge coupling (1) according to the preceding claim, **characterized in that** said decompression means comprise a decompression valve (16) placed in a substantially axial position at the opposite end of said half-coupling (3) with respect to the front valve assembly (4) and adapted to drain the oil in said clean oil recovery channel (c).

3. A cartridge coupling (1) according to the preceding claim, **characterized in that** said decompression valve may also be manually actuated by means of cam and lever actuating means (17).

4. A cartridge coupling (1) according to one or more of the preceding claims, **characterized in that** behind said front valve assembly (4), delimited by the inner walls of said inner slider (10), a chamber (15) is provided, adapted to be filled with the pressurized fluid when the coupling is operating.

5. A cartridge coupling (1) according to one or more of the preceding claims, **characterized in that** said decompression valve (16) forms a metal seal of the cone-on-edge type on said inner body (8).

## Patentansprüche

1. Kartuschenanschluss (1) von dem Typ, der für den Anschluss einer unter Druck stehenden Leitung für strömungsfähige Medien zwischen einem Fahrzeug oder Aggregat und einer Verbrauchseinrichtung ausgelegt ist, wobei dieser Kartuschenanschluss ein äußeres Gehäuse (2) umfasst, in welches eine Aufnahme-Kupplungshälfte (3) eingesetzt ist, die eine vordere Ventilanordnung (4) umfasst und so ausgelegt ist, dass sie eine Einsteck-Kupplungshälfte (50) aufnimmt, die auch mit einer Ventilanordnung (51) ausgestattet ist, wobei das genannte Gehäuse mindestens einen Hauptförderkanal (a), einen Reinöl-Rückgewinnungskanal (c) und einen Schmutzöl-Ablasskanal (b) umfasst und an der genannten Aufnahme-Kupplungshälfte (3) außerdem Druckentlastungsmittel (16) umfasst, um den Druck in der Leitung dergestalt herabzusetzen, damit die Arbeitsgänge des Ankuppelns der Einsteck-Kupplungshälfte an die genannte Aufnahme-Kupplungshälfte und des Entkuppelns derselben erleichtert werden, und außerdem mechanische Arretiermittel (9, 10a) umfasst, welche auf die genannte Ventilanordnung (4) wirken und so ausgelegt sind, dass sie, wenn die genannte Einsteck-Kupplungshälfte (50) in die genannte Aufnahme-Kupplungshälfte eingesteckt ist, verhindert, dass die Ventilanordnung (4) der genannten Aufnahme-Kupplungshälfte (3) ungeachtet der Strömungsrichtung und der Druckhöhe des Mediums in der Leitung schließt, **dadurch gekennzeichnet, dass** die genannten mechanischen Arretiermittel mindestens eine oder mehrere mechanische Arretierkugeln (9) umfassen, welche von einem inneren Körper (8) getragen werden und so ausgelegt sind, dass sie auf selektive Weise in geeigneten Sitze (10a) Aufnahme finden, welche auf der Außenfläche einer inneren, auch in axialer Richtung beweglichen Gleitvorrichtung (10) erhalten werden, wobei der genannte innere Körper (8) und die genannte innere Gleitvorrichtung (10) zueinander koaxial sind und auch zu der genannten vorderen Ventilanordnung (4) koaxial sind.

2. Kartuschenanschluss (1) nach dem vorangehenden Anspruch, **dadurch gekennzeichnet, dass** die genannten Druckentlastungsmittel ein Druckentlastungsventil (16) umfassen, welches sich in einer im Wesentlichen axialen Stellung am entgegengesetzt befindlichen Ende der genannten Kupplungshälfte (3) in Bezug auf die vordere Ventilanordnung (4) befindet und dergestalt ausgelegt ist, dass es das Öl in dem genannten Reinöl-Rückgewinnungskanal (c) ablässt.

3. Kartuschenanschluss (1) nach dem vorangehenden Anspruch, **dadurch gekennzeichnet, dass** das genannte Druckentlastungsventil auch von Hand mittels einer auf Nockenscheibe und Hebel beruhenden Betätigungsvorrichtung (17) betätigt werden kann.

4. Kartuschenanschluss (1) nach einem oder mehreren der vorangehenden Ansprüche, **dadurch gekennzeichnet, dass** hinter der genannten vorderen Ventilanordnung (4) und begrenzt durch die Innenwände der genannten inneren Gleitvorrichtung (10) eine Kammer (15) vorhanden ist, welche dergestalt ausgelegt ist, dass sie mit den unter Druck stehenden Medium gefüllt wird, wenn die Kupplung in Funktion ist.

5. Kartuschenanschluss (1) nach einem oder mehreren der vorangehenden Ansprüche, **dadurch gekennzeichnet, dass** das genannte Druckentlastungsventil (16) auf dem genannten inneren Körper (8) eine Metalldichtung vom Typ Kegel auf Kante bildet.

## Revendications

1. Couplage de cartouche (1) du type apte à connecter un conduit de fluide sous pression entre un véhicule ou appareil et une utilité, comprenant un boîtier extérieur (2) dans lequel un demi-couplage femelle (3) est inséré, comprenant un ensemble de vanne frontale (4) et apte à recevoir un demi-couplage mâle (50) également réalisé dans un ensemble de vanne (51), ledit boîtier comprenant au moins un canal d'amenée principal (a), un canal de récupération d'huile propre (c) et un canal de drainage d'huile encrassée (b), et comprenant en outre, sur ledit demi-couplage femelle (3), des moyens de décompression (16) pour réduire la pression dans le conduit en facilitant ainsi les opérations de couplage et découplage du demi-couplage mâle à/du demi-couplage femelle, comprenant en outre des moyens de blocage mécanique (9, 10a) agissant sur ledit ensemble de vanne (4) et aptes, lorsque ledit demi-couplage mâle (50) est inséré dans ledit demi-couplage femelle, à empêcher la fermeture de l'ensemble de vanne (4) dudit demi-couplage femelle (3) quelque soit la direction d'écoulement et l'intensité de pression du fluide dans le conduit, **caractérisée en ce que** lesdits moyens de blocage mécaniques comprennent au moins une ou plusieurs billes de blocage mécanique (9) supportées par un corps intérieur (8) et aptes à être logées sélectivement dans des sièges appropriés (10a) obtenus sur la surface extérieure d'un curseur intérieur (10) également déplaçable axialement, ledit corps intérieur (8) et ledit curseur intérieur (10) étant coaxiaux l'un à l'autre et coaxiaux audit ensemble de vanne frontale (4).

2. Couplage de cartouche (1) selon la revendication précédente, **caractérisé en ce que** lesdits moyens de décompression comprennent une vanne de décompression (16) placée dans une position sensiblement axiale au côté opposé dudit demi-couplage (3) relativement audit ensemble de vanne frontale (4) et apte à drainer l'huile dans ledit canal de récupération d'huile propre (c).

3. Couplage de cartouche (1) selon la revendication précédente, **caractérisé en ce que** ladite vanne de décompression peut également être actionnée manuellement par des moyens d'actionnement à came et à levier (17).

4. Couplage de cartouche (1) selon une ou plusieurs des revendications précédentes, **caractérisé en ce que** derrière ledit ensemble de vanne frontale (4), délimité par les parois intérieures dudit curseur intérieur (10), une chambre (15) est réalisée, apte à être remplie avec le fluide sous pression lorsque le couplage fonctionne.

5. Couplage de cartouche (1) selon l'une ou plusieurs des revendications précédentes, **caractérisé en ce que** ladite vanne de décompression (16) forme un joint métallique du type cone-sur-bord sur ledit cors intérieur (8) .
